# EUROPEAN PATENT APPLICATION

(11) **EP 4 383 507 A1**
(43) Date of publication of application: **12.06.2024**
(21) Application number: 21952425.3
(22) Date of filing: 06.08.2021
(51) Int. Cl.: H02J 7/00, H02H 7/18

(54) **CONNECTION DETECTION APPARATUS, STARTUP POWER SUPPLY DEVICE, AND BATTERY CLIP DEVICE**

(71) Applicant: Shenzhen Carku Technology Co., Limited, Shenzhen, Guangdong 518000 (CN)
(72) Inventor: LEI, Yun, Shenzhen, Guangdong 518000 (CN); ZHANG, Zhifeng, Shenzhen, Guangdong 518000 (CN); LIN, Jianping, Shenzhen, Guangdong 518000 (CN)
(74) Representative: Hamer, Christopher K.
(86) International application number: PCT/CN2021/111261
(87) International publication number: WO 2023/010551

(57) **Abstract**

A device for connection detection is provided. The device includes: a power connecting end, in electrical connection with a power module; a load connecting end, in electrical connection with an external load; a switch circuit, electrically connected between the power connecting end and the load connecting end; a voltage control circuit, in electrical connection with the load connecting end and configured to output a voltage through the load connecting end; and a voltage detecting circuit, in electrical connection with the load connecting end and configured to measure voltage of the load connecting end and output a voltage detection signal, the voltage detection signal being configured to control an ON/OFF state of the switch circuit. A jump starter apparatus including the device for connection detection and a battery clip including the device for connection detection are further provided.

## Description

### TECHNICAL FIELD

This disclosure relates to the field of battery technology, and particularly relates to a device for connection detection, a jump starter apparatus, and a battery clip.

### BACKGROUND

At present, jump starter products on the market can normally identify a connection state of a battery clip when the jump starter product is correctly or reversely connected to a car battery. However, when a positive electrode and a negative electrode of the battery clip are electrically connected directly, that is, the positive electrode and the negative electrode are short circuited directly, or the battery clip is reversely connected to a load port of the car, if a forced output button is pressed for forced output at this time, this is equivalent to shorting the positive and negative electrodes of the battery cells of the jump starter product, which will cause a short circuit of the battery cells or even cause safety accidents.

### SUMMARY

Taking disadvantages of the above related art into consideration, disclosed herein are implementations of a device for connection detection, a jump starter apparatus including the device for connection detection, and a battery clip including the device for connection detection.

The device for connection detection, including: a power connecting end, configured to be electrically connected with a power module; a load connecting end, configured to be electrically connected with an external load; a switch circuit, electrically connected between the power connecting end and the load connecting end; a voltage control circuit, in electrical connection with the load connecting end and configured to output a voltage through the load connecting end; and a voltage detecting circuit, in electrical connection with the load connecting end and configured to detect a voltage of the load connecting end and output a corresponding voltage detection signal, the voltage detection signal being configured to control an ON/OFF state of the switch circuit.

In summary, the device for connection detection in implementations of the disclosure, can identify a state of the load connecting end by detecting the voltage of the load connecting end to obtain the voltage detection signal, so as to control the ON/OFF state of the switch circuit, which can prevent the power module from outputting power to improve the safety and reliability of the circuit when the load connecting end is in an abnormal connection state such as a short circuit or reverse connection with a load.

Optionally, the device further including a control circuit in electrical connection with the switch circuit and the voltage detecting circuit, where the control circuit is configured to control the state of the switch circuit according to the voltage detection signal.

Optionally, the control circuit configured to control the state of the switch circuit according to the voltage detection signal is configured to: in response to the voltage detection signal outputted by the voltage detecting circuit being less than a preset voltage value, output a first switch-control-signal to the switch circuit to control the switch circuit to be turned-off, to disconnect an electrical connection between the power module and the external load.

Optionally, the device for connection detection further includes an output triggering circuit. The output triggering circuit is configured to output a trigger signal in response to a trigger operation, the trigger signal is for controlling the voltage control circuit to output the voltage via the load connecting end.

Optionally, the device for connection detection further includes a control circuit, where the control circuit is connected to the output triggering circuit, the voltage detecting circuit, and the switch circuit, the control circuit is configured to control an ON/OFF state of the switch circuit according to the trigger signal and the voltage detection signal.

Optionally, the control circuit is configured to output a second switch-control-signal to control the switch circuit to conduct the electrical connection between the power module and the external load, when the trigger signal is received and the voltage detection signal outputted by the voltage detecting circuit is greater than or equal to a preset voltage value.

Optionally, the control circuit is further configured to output an ON-control signal according to the trigger signal, the voltage control circuit is configured to output the voltage via the load connecting end according to the ON-control signal.

Optionally, the output triggering circuit includes a key unit, the trigger operation includes pressing the key unit.

Optionally, the voltage control circuit includes: a voltage input end, configured to be connected with a voltage source, where the voltage source is configured to provide the voltage; a voltage detecting end, configured to be connected with the load connecting end; a second switch unit, configured to be connected with the voltage source and the voltage detecting end, where the voltage control circuit can conduct the voltage input end and the voltage detecting end through a closing of the second switch unit, such that the voltage source can output the voltage via the load connecting end.

Optionally, the second switch unit includes a first transistor, a second transistor, and a first resistor, where a control end of the first transistor is in electrical connection with a signal input end of the voltage control circuit, a first end of the first transistor is in electrical connection with a first grounded end, a second end of the first transistor is in electrical connection with a control end of the second transistor, a first end of the second transistor is in electrical connection with the voltage input end, and the first resistor is electrically connected between the control end of the second transistor and the first end of the second transistor.

Optionally, the voltage control circuit further includes a unidirectional conduction unit, the voltage input end is connected with the voltage detecting end via the unidirectional conduction unit and the second switch unit, the unidirectional conduction unit is configured to realize unidirectional conduction of a path between the voltage source and the load connecting end; the unidirectional conduction unit includes a first diode; and/or the voltage control circuit further includes a current-limiting protection unit, the voltage input end is connected to the voltage detecting end via the current-limiting protection unit and the second switch unit, the current-limiting protection unit is configured for current-limiting protection of the path between the voltage source and the load connecting end, the current-limiting protection unit includes a second resistor.

Optionally, the voltage detecting circuit includes a voltage division module, the voltage division module is configured to divide the voltage of the load connecting end to obtain the voltage detection signal.

Optionally, the voltage detecting circuit further includes a clamping module, the clamping module is in electrical connection with a voltage source, a second grounded end, and an output end of the voltage division module, an output end of the clamping module is configured to be coupled with the voltage detection signal.

Optionally, the voltage division module includes a third resistor and a fourth resistor, the clamping module includes a second diode and a third diode, one end of the third resistor is in electrical connection with the voltage detecting end, and the other end of the third resistor is in electrical connection with one end of the fourth resistor, the other end of the fourth resistor is in electrical connection with the second grounded end, a cathode of the second diode is in electrical connection with the voltage input end, an anode of the second diode is in electrical connection with a cathode of the third diode, an anode of the third diode is in electrical connection with the second grounded end.

Optionally, the power connecting end includes a first power-connecting-end and a second power-connecting-end, and the load connecting end includes a first load-connecting-end and a second load-connecting-end; and the switch circuit is connected between the first power-connecting-end and the first load-connecting-end, the voltage control circuit and the voltage detecting circuit are each connected between the switch circuit and the first load-connecting-end.

Optionally, the first power-connecting-end is configured to be connected to a positive electrode of the power module, and the second power-connecting-end is configured to be connected to a negative electrode of the power module; and the first load-connecting-end is configured to be connected to a positive electrode of the external load, and the second load-connecting-end is configured to be connected to a negative electrode of the external load.

Optionally, the device for connection detection further includes a connection-state alarm circuit in electrical connection with the control circuit, the connection-state alarm circuit is configured to signal an alarm to indicate that the external load is in an abnormal connection state, when the control circuit detects that the voltage detection signal outputted by the voltage detecting circuit is smaller than a preset voltage value.

Optionally, the control circuit is configured to output a first indication-control-signal to the connection-state alarm circuit, when the control circuit detects that the voltage detection signal outputted by the voltage detecting circuit is smaller than the preset voltage value, the connection-state alarm circuit is configured to signal the alarm according to the first indication-control-signal, to indicate that the external load is in the abnormal connection state; and the control circuit is configured to output a second indication-control-signal to the connection-state alarm circuit, when the control circuit detects that the voltage detection signal outputted by the voltage detecting circuit is greater than or equal to the preset voltage value, the connection-state alarm circuit is configured to signal an indication according to the second indication-control-signal, to indicate a corresponding work state.

Optionally, the device for connection detection further includes a load-reverse-connection control circuit in electrical connection with the load connecting end, the load-reverse-connection control circuit is configured to detect a connection state of the external load via the load connecting end, and output a reverse-connection control signal upon detecting that the external load is in a reverse connection with the load connecting end, the reverse-connection control signal is for triggering an alarm or controlling the ON/OFF state of the switch circuit.

Optionally, the switch circuit includes a first switch unit and a switch control unit, the first switch unit is electrically connected between the power connecting end and the load connecting end, is configured to conduct or disconnect the electrical connection between the power module and the external load; and the switch control unit is in electrical connection with the first switch unit and the control circuit, the switch control unit is configured to receive the switch control signal outputted by the control circuit and control the first switch unit according to the switch control signal.

Optionally, the switch unit further includes a switch drive-power unit in electrical connection with the power connecting end and the first switch unit, the switch drive-power unit is configured to provide drive-power for the first switch unit to make the switch circuit powered on.

Based on the same invention idea, a jump starter apparatus is further provided in the disclosure. The jump starter apparatus includes a case, a power module, and the device for connection detection described above, the power module and at least part of the device for connection detection are arranged in the case, the power connecting end of the device for connection detection is in electrical connection with the power module.

Based on the same invention idea, a battery clip is further provided in the disclosure. The battery clip includes a case and the device for connection detection described above, the power module and at least part of the device for connection detection are arranged in the case, the power connecting end of the device for connection detection is configured to be connected to a power input interface.

### BRIEF DESCRIPTION OF THE DRAWINGS

In order to more clearly explain technical solutions in implementations of the disclosure, the following will briefly introduce the accompanying drawings that need to be used in the implementations. It is obvious that the drawings described below are some implementations of the disclosure. For those skilled in the art, other drawings can be obtained according to these drawings without paying creative effort.
FIG. 1 is a schematic circuit diagram illustrating a device for connection detection according to implementations of the disclosure.
FIG. 2 is a schematic diagram of a circuit structure of the device for connection detection illustrated in FIG. 1.
FIG. 3 is a schematic diagram of a circuit structure of a controller illustrated in FIG.2.
FIG. 4 is a schematic diagram of a circuit structure of a voltage control circuit in the device for connection detection illustrated in FIG. 2.
FIG. 5 is a schematic diagram of a structure circuit of a voltage detecting circuit in the device for connection detection illustrated in FIG. 2.
FIG. 6 is a schematic structure diagram illustrating a jump starter apparatus according to implementations of the disclosure.
FIG. 7 is a schematic structure diagram illustrating a battery clip according to implementations of the disclosure.

### DETAILED DESCRIPTION

In order to facilitate understanding of the present disclosure, a detailed description will now be given with reference to relevant accompanying drawings. The accompanying drawings illustrate some implementations of the present disclosure. However, the present disclosure can be implemented in many different forms and is not limited to implementations described here. On the contrary, these implementations are provided for a more thorough and comprehensive understanding of the present disclosure.

The following implementations are described with reference to the accompanying drawings to illustrate certain implementations which can be implemented in the disclosure. The sequence numbers for components in the disclosure, such as "first", "second" and so on, are used to distinguish the objects described and do not have any sequential or technical meaning. The term "connection" mentioned in this disclosure includes direct and indirect connections unless otherwise specified. The terms about orientation, such as "above", "below", "front", "behind" "left", "right", "inside", "outside", "side", etc., are used to indicate the orientation of the accompanying drawings, and these terms about orientation are used for better and clearer explanation and understanding of the disclosure rather than indicating or implying that apparatuses or elements must have a certain orientation, be structured and operated in a certain orientation, and thus cannot be understood as a limitation of the disclosure.

In the description of this disclosure, it should be noted that, unless otherwise expressly specified and limited, the terms "install" and "connect" should be understood in a broad sense, for example, it may be a fixed connection, a detachable connection, or an integrated connection; a mechanical connection; a direct connection, or an indirect connection through a medium, an internal connection between two elements. The term "electrical connection" is to distinguish from "connection" that is commonly used in description of mechanical structures. "Connection" in the mechanical structures usually means that different components or parts have a direct contact, but the "electrical connection" in circuit structures generally does not reflect a direct contact among different components or parts. In the technical field of this disclosure, "electrical connection" means a circuit connection by a physical contact, not a connection through a wireless communication signal, according to the understanding to the "electrical connection" of those skilled in the field when reading this specification. Connection in circuit structures is expressed as circuit connection or electrical connection, and connection in mechanical structures is expressed as physical structure connection. For those skilled in the art, the specific meaning of the above terms in the disclosure can be understood according to specific circumstances. It should be noted that the terms in this specification, claims and drawings, such as "first", "second", "third" etc., are used to distinguish different objects, not to describe a specific sequence. In addition, the terms "include", "may include", "comprise" or "may comprise" used herein indicate the existence of corresponding features, numbers, operations, elements, components, or combinations thereof, not limit the existence or addition of one or more other features, numbers, operations, elements, components, or combinations thereof, which is intended to cover non-exclusive inclusion.

Unless otherwise defined, all technical and scientific terms used herein have the same meaning as commonly understood by those skilled in the art to which the disclosure belongs. The terms used in the specification of this disclosure are only used for the purpose of describing specific implementations and are not intended to limit this disclosure.

At present, jump starter products on the market can normally identify a connection state of a battery clip when the jump starter product is correctly or reversely connected to a car battery. However, when a positive electrode and a negative electrode of the battery clip are electrically connected directly, that is, the positive electrode and the negative electrode are short circuited directly, or the battery clip is reversely connected to a load port of the car without the battery, if a forced output button is pressed for forced output at this time, this is equivalent to shorting the positive and negative electrodes of the battery cells of the jump starter product. Therefore, if no short-circuit identification and detection is carried out on the connection of the battery clip before output, it will cause a short circuit of the battery cells or even cause safety accidents.

A solution is provided in this disclosure, which can solve the above technical problems by short-circuit identification and detection of the connection state of the jump starter product before outputting power, so as to avoid the occurrence of safety accidents caused by the short circuit of the battery cells. The solution will be explained in detail in the following implementations.

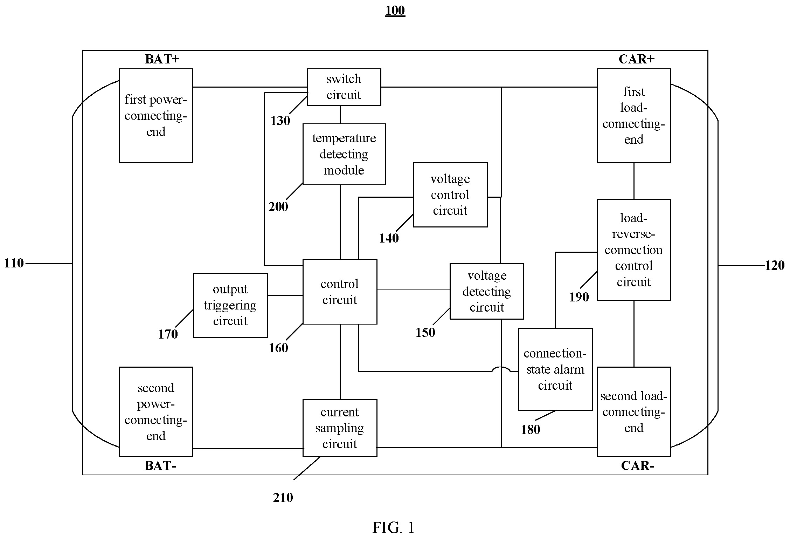

Referring to FIG. 1, FIG. 1 is a schematic circuit diagram illustrating a device for connection detection according to implementations of the disclosure. The device for connection detection can be applied in a jump starter apparatus and can also be applied in a battery clip. As illustrated in FIG. 1, the device 100 for connection detection in this disclosure may at least include a power connecting end 110, a load connecting end 120 and a switch circuit 130. The power connecting end 110 is configured to be electrically connected with a power module (not illustrated in the drawing). The load connecting end 120 is configured to be electrically connected with an external load (not illustrated in the drawing). The switch circuit 130 is electrically connected between the power connecting end 110 and the load connecting end 120.

A voltage detection signal is relevant to the voltage of the load connecting end, but the voltage detection signal is not necessarily the voltage of the load connecting end. For example, the voltage detection signal may include a voltage signal obtained by dividing the voltage of the load connecting end, or a voltage signal obtained by amplifying the voltage of the load connecting end, or a voltage signal obtained by inverting the voltage of the load connecting end. As long as the value of the voltage detection signal can change based on the voltage of the load connecting end, and different values of the voltage detection signal can reflect a corresponding state of the load connecting end, they should fall within the protection scope of implementations of the disclosure.

The device for connection detection in implementations of this disclosure can obtain a corresponding voltage detection signal by detecting the voltage of the load connecting end, and different voltage values of the load connecting end are relevant to the load condition of the load connecting end. Therefore, an ON/OFF state of the switch circuit can be controlled based on the voltage detection signal, which can avoid the power module supplying power in an abnormal state, such as the load connecting end is short circuited or reversed with the external load, to improve circuit safety and reliability.

In addition, in implementations of this disclosure, the device 100 for connection detection can perform detection with both the voltage control circuit 140 and the voltage detecting circuit 150 instead of with only the voltage detecting circuit 150. The above configuration has the following advantages. If only the voltage detecting circuit 150 is used, the voltage of the load connecting end 120 is 0V in a state where the load connecting end 120 short circuited or in a state where the load connecting end 120 connected to a car load without a car battery, i.e. the voltage detection signals corresponding to the above two states are the same. Since the jump-starter module is prohibited from outputting power to the external load when the load connecting end is short circuited, the jump-starter module is also prohibited from outputting power to the external load when the load connecting end 120 is connected to the car load without a car battery. In contrast, the device 100 for connection detection in implementations of this disclosure can detect a short circuit by using the voltage control circuit 140 and the voltage detecting circuit 150. When there is short circuit, the voltage of the load connecting end 120 is 0V. When the load connecting end 120 is connected to the car load without a car battery, since the voltage control circuit 140 outputs a voltage and a car load divides the voltage, the voltage of the load connecting end 120 is not 0V. As such, the state in which the load connecting end 120 is short circuited and the state in which the load connecting end 120 is connected to a car load without a car battery can be distinguished. In this way, when a user connects a jump starter apparatus to a car without a car battery, the jump starter apparatus can still be triggered to output.

Exemplarily, in implementations of this disclosure, the power connecting end 110 includes a first power-connecting-end BAT+ and a second power-connecting-end BAT-, where the first power-connecting-end BAT+ is configured to be connected to the positive electrode of the power module and the second power-connecting-end BAT- is configured to be connected to the negative electrode of the power module. It can be understood that the first power-connecting-end BAT+ may be a connecting end for the positive electrode of the power supply and the second power-connecting-end BAT- may be a connecting end for the negative electrode of the power supply.

The power module can be connected to the device 100 for connection detection through the power connecting end 110, so as to provide the device 100 for connection detection with operating voltage and electric energy, and provide the external load with power through the switch circuit 130. It can be understood that, when the device 100 for connection detection is applied to a jump starter apparatus, the power module may be a built-in power module of the jump starter apparatus. When the device 100 for connection detection is applied to a battery clip, the power module may be a power module of an external power device such as an external emergency jump starter or other energy-storage power devices.

In implementations of this disclosure, the load connecting end includes a first load-connecting-end CAR+ and a second load-connecting-end CAR-. The first load-connecting-end is configured to be connected to a positive electrode of the external load, and the second load-connecting-end is configured to be connected to a negative electrode of the external load. It can be understood that the first load-connecting-end CAR+ may be a connecting end for the positive electrode of the load and the second load-connecting-end CAR- may be a connecting end for the negative electrode of the load. The second load-connecting-end CAR- may further be in electrical connection with a grounded end, specifically, in implementations of this disclosure, the second load-connecting-end CAR- is in electrical connection with a second grounded end.

In implementations of this disclosure, the external load may be a car battery or a car engine. It can be understood that the car battery includes but is not limited to a lead acid battery, a lithium battery, a super capacitor, etc. It can be further understood that the power connecting end 110, the load connecting end 120 and the switch circuit 130 constitute a current outputting path for the power module to discharge to the external load, and the switch circuit 130 is configured to conduct or disconnect the current outputting path. In this way, the power module can discharge the external load through the device 100 for connection detection.

As illustrated in FIG. 1, the device 100 for connection detection in this disclosure can further include a voltage control circuit 140 and a voltage detecting circuit 150. The voltage control circuit 140 is in electrical connection with the load connecting end 120 and configured to output a voltage through the load connecting end 120. The voltage detecting circuit 150 is in electrical connection with the load connecting end 120 and configured to detect a voltage of the load connecting end 120 and output a corresponding voltage detection signal, the voltage detection signal is configured to control an ON/OFF state of the switch circuit 130.

In implementations of this disclosure, the switch circuit 130 is connected between the first power-connecting-end BAT+ and the first load-connecting-end CAR+, the voltage control circuit 140 and the voltage detecting circuit 150 are each connected between the switch circuit 130 and the first load -connecting-end CAR+. In other implementations, the switch circuit 130 may also be connected between the second power-connecting-end BAT- and the second load-connecting-end CAR-.

As illustrated in FIG. 1, the device 100 for connection detection in this disclosure may further include a control circuit 160. The control circuit 160 is in electrical connection with the switch circuit 130 and the voltage detecting circuit 150, where the control circuit 160 is configured to control the ON/OFF state of the switch circuit 130 according to the voltage detection signal. Exemplarily, the control circuit 160 is configured to control the ON/OFF state of the switch circuit 130 according to the voltage detection signal as follows. In response to the voltage detection signal of the load detecting end 120 being less than a preset voltage value, the control circuit 160 outputs a first switch-control-signal to the switch circuit 130 to control the switch circuit 130 to be turned-off, to disconnect the electrical connection between the power module and the external load.

Exemplarily, as illustrated in FIG. 1, if the load connecting end is short circuited, the voltage of the load connecting end is 0V. If the load connecting end is reversely connected to the car battery and/or an external load of the car engine, the voltage of the load connecting end is less than or equal to 0V. If the load connecting end is directly connected to the car battery or an external load of the car engine, the voltage of the load connecting end is greater than 0V. Suppose that the voltage detection signal is the voltage signal obtained by processing the voltage of the load connecting end according to a preset ratio, and the preset voltage value is greater than 0V, in this way, if the load connecting end is short circuited or reversely connected with the external load, the voltage of the load connecting end is less than or equal to 0V. Correspondingly, if the voltage detection signal is less than or equal to 0V, and the voltage detection signal is less than the preset voltage value (greater than 0V), the switch circuit disconnects the power connecting end and the load connecting end, so as to prevent the power module from outputting to the external load in a short circuit state or the reverse-connection state, and further avoid circuit safety problem. As illustrated in FIG. 1, the load connecting end includes the first load-connecting-end CAR+ and the second load-connecting-end CAR-. The load connecting end is short circuited includes that the first load-connecting-end CAR+ and the second load-connecting-end CAR- are directly electrically connected, such as two clamps of the battery clip touch directly or clip each other. The load connecting end is reversely connected with an external load includes that the first load-connecting-end CAR+ is connected to the negative electrode of the external load, and the second load-connecting-end CAR- is connected to the positive electrode of the external load.

As illustrated in FIG. 1, the device 100 for connection detection may further include an output triggering circuit 170. The output triggering circuit 170 is in electrical connection with the control circuit 160 and is configured to output a trigger signal in response to a trigger operation. The trigger signal is for controlling the voltage control circuit 140 to output the voltage via the load connecting end 120. Furthermore, the control circuit 160 is further configured to output an ON-control signal according to the trigger signal, and the voltage control circuit 140 is configured to output the voltage via the load connecting end 120 according to the ON-control signal.

In implementations of this disclosure, the output triggering circuit 170 is a key unit, the trigger operation includes pressing the key unit.

Exemplarily, one end of the key unit is connected with the trigger-signal input end of the control circuit, and the other end of the key unit is grounded. When the key unit is not pressed, the trigger-signal input end is not grounded and the trigger signal is a high level signal. When the key unit is pressed, the trigger-signal input end is grounded and the trigger signal is a low level signal. When the key unit is triggered, i.e. the trigger signal is a low level signal, the control circuit 160 can output an ON-control signal to control the voltage control circuit 140 to output voltage through the load connecting end 120.

In implementations of this disclosure, the control circuit 160 is connected to the output triggering circuit 170, the voltage detecting circuit 150, and the switch circuit 130, the control circuit 160 is further configured to control the ON/OFF state of the switch circuit according to the trigger signal and the voltage detection signal.

In implementations of this disclosure, the control circuit 160 is further configured to output a second switch-control-signal to control the switch circuit 130 to conduct the electrical connection between the power module and the external load, when the trigger signal is received and the voltage detection signal of the load detecting end 120 is greater than or equal to a preset voltage value. As illustrated in FIG. 1, the device 100 for connection detection in this disclosure may further include a connection-state alarm circuit 180. The connection-state alarm circuit 180 is in electrical connection with the control circuit 160. The connection-state alarm circuit 180 is configured to signal an alarm to indicate that the external load is in an abnormal connection state, when the control circuit 160 detects that the voltage detection signal outputted by the voltage detecting circuit 150 is smaller than the preset voltage value. Specifically, the control circuit 160 is configured to output a first indication-control-signal to the connection-state alarm circuit 180, when the control circuit 160 detects that the voltage detection signal outputted by the voltage detecting circuit 150 is smaller than the preset voltage value, the connection-state alarm circuit 180 is configured to signal the alarm according to the first indication-control-signal, to indicate that the external load is in an abnormal connection state. The control circuit 160 is configured to output a second indication-control-signal to the connection-state alarm circuit 180, when the control circuit 160 detects that the voltage detection signal outputted by the voltage detecting circuit 150 is greater than or equal to the preset voltage value, the connection-state alarm circuit 180 is configured to signal an indication according to the second indication-control-signal, to indicate a corresponding work state.

As illustrated in FIG. 1, the device 100 for connection detection in this disclosure may further include a load-reverse-connection control circuit 190. The load-reverse-connection control circuit 190 is in electrical connection with the load connecting end 120, the switch circuit 130 and the connection-state alarm circuit 180. The load-reverse-connection control circuit 190 is configured to detect a connection state of the external load via the load connecting end 120, and output a reverse-connection control signal upon detecting that the external load is in reverse connection with the load connecting end 120, the reverse-connection control signal is for triggering an alarm or controlling the ON/OFF state of the switch circuit 130.

In implementations of this disclosure, the device 100 for connection detection further includes a temperature detecting module 200. The temperature detecting module 200 is in electrical connection with the switch circuit 130 and the control circuit 160. The temperature detecting module 200 is configured to detect the temperature of the switch circuit 130 to prevent the switch circuit 130 from overheating.

In implementations of this disclosure, the device 100 for connection detection further includes a current sampling circuit 210. The current sampling circuit 210 is in electrical connection with the power connecting end 110, the load connecting end 120, the voltage detecting circuit 150, the control circuit 160, and the load-reverse-connection control circuit 190. The current sampling circuit 210 is configured to detect the magnitude of the charging/discharging current of the power connection 110 to prevent overcurrent or reverse charge, thus protecting the power module.

Therefore, when the output triggering circuit 170 outputs a trigger signal in response to a trigger operation, the control circuit 160 outputs an ON-control signal according to the trigger signal, the voltage control circuit 140 outputs the voltage according to the ON-control signal. In response to the voltage detection signal of the load detecting end 120 being less than the preset voltage value, the control circuit 160 outputs a first switch-control-signal to the switch circuit 130 to control the switch circuit 130 to be turned-off, to disconnect electrical connection between the power module and the external load. The control circuit 160 outputs a first indication-control-signal to the connection-state alarm circuit 180, when the control circuit 160 detects that the voltage detection signal outputted by the voltage detecting circuit 150 is smaller than the preset voltage value. The connection-state alarm circuit 180 signals an alarm according to the first indication-control-signal, to indicate that the external load is in an abnormal connection state, thus avoiding short circuit of the battery cells and safety accidents caused by short circuit.

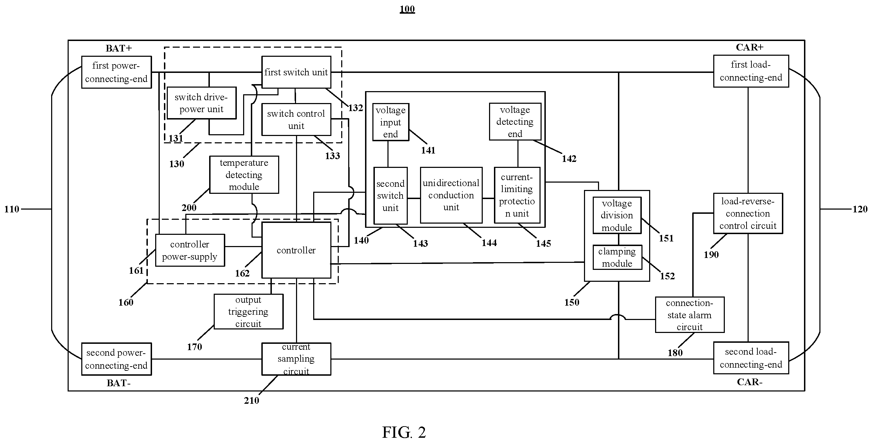

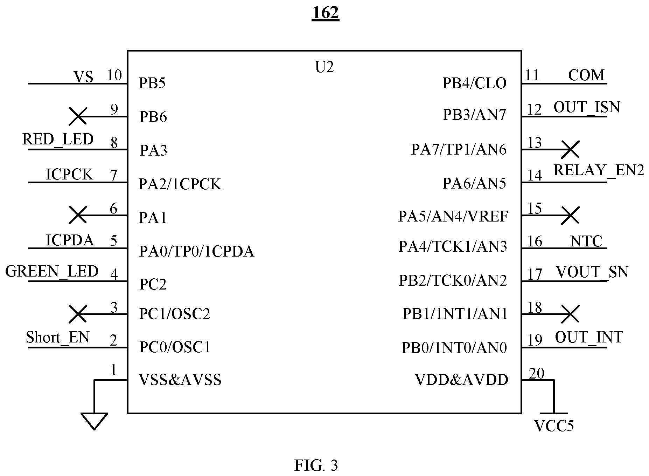

Referring to FIG. 2 and FIG. 3, FIG. 2 is a schematic diagram of a circuit structure of the device for connection detection illustrated in FIG. 1. FIG. 3 is a schematic diagram of a circuit structure of the voltage control circuit 140 illustrated in FIG.2. As illustrated in FIG. 2 and FIG. 3, the switch circuit 130 in the device 100 for connection detection in this disclosure may at least include a switch drive-power unit 131, a first switch unit 132, and a switch control unit 133. The switch drive-power unit 131 is in electrical connection with the power connecting end 110, and the first switch unit 132. The switch drive-power unit 131 is configured to provide drive-power for the first switch unit 132 to make the switch circuit 130 powered on.

In implementations of this disclosure, the first switch unit 132 is in electrical connection with the power connecting end 110, the load connecting end 120, the switch drive-power unit 131, the switch control unit 133, the load-reverse-connection control circuit 190, and the temperature detecting module 200. That is, the first switch unit 132 is in electrical connection between the power connecting end 110 and the load connecting end 120, and is configured to conduct or disconnect the electrical connection between the power module and the external load.

In implementations of this disclosure, the switch control unit 133 is in electrical connection with the first switch unit 132 and the control circuit 160, the switch control unit 133 is configured to receive a switch control signal outputted by the control circuit 160 and control the first switch unit 132 according to the switch control signal.

In implementations of this disclosure, the voltage control circuit 140 may at least include the voltage input end 141, the voltage detecting end 142, and the second switch unit 143. The voltage input end 141 is in electrical connection with a voltage source VCC5, the voltage source VCC5 is configured to provide the voltage, i.e., the voltage source provides the voltage via the voltage input end 141. The voltage detecting end 142 is in electrical connection with the load connecting end, the second switch unit 143 is in electrical connection with the voltage source VCC5 and the voltage detecting end. The voltage control circuit 140 can conduct the voltage input end 141 and the voltage detecting end 142 when the second switch unit is closed, such that the voltage source VCC5 can output a voltage via the load connecting end 120.

In implementations of this disclosure, the voltage control circuit 140 may further include a unidirectional conduction unit 144. The voltage input end 141 is connected with the voltage detecting end 142 via the unidirectional conduction unit 144 and the second switch unit 143, the unidirectional conduction unit 144 is configured to realize unidirectional conduction of a path between the voltage source VCC5 and the load connecting end 120.

In implementations of this disclosure, the voltage control circuit 140 may further include a current-limiting protection unit 145, the voltage input end 141 is connected to the voltage detecting end 142 via the current-limiting protection unit 145 and the second switch unit 143. The current-limiting protection unit 145 is configured for current-limiting protection of the path between the voltage source VCC5 and the load connecting end 120.

As illustrated in FIG. 2 and FIG. 3, in implementations of this disclosure, the voltage detecting circuit 150 at least includes a voltage division module 151 and a clamping module 152. The voltage division module 151 is in electrical connection with the voltage detecting end 142 and the clamping module 152. The voltage division module 151 is configured to divide the voltage of the load connecting end 120 to obtain the voltage detection signal.

The clamping module 152 is in electrical connection with the voltage input end 141 and the voltage division module 151, i.e., the clamping module 152 is in electrical connection with the voltage source, the second grounded end, and an output end of the voltage division module 151. An output end of the clamping module 152 is coupled with the voltage detection signal.

In implementations of this disclosure, the control circuit 160 at least includes a controller power-supply 161 and a controller 162. The controller power-supply 161 is in electrical connection with the power connecting end 110, the voltage control circuit 140, and the controller 162, and configured to provide working power for the voltage control circuit 140 and the controller 162. Specifically, the controller power-supply 161 is configured to receive the input voltage of the power module via the power connecting end 110, and to perform voltage conversion on the input voltage to output a stable voltage, so as to provide a stable supply-voltage to every functional module of the device 100 for connection detection. In other implementations of this disclosure, the controller power-supply 161 can adopt a DC-DC converter or a linear voltage regulator, such as a low dropout regulator (LDO). The controller may include a micro controller unit (MCU). In addition, other than using a controller, the control circuit can also use a control circuit constituted by hardware circuits. As long as the circuit module for controlling the switch circuit based on the voltage detection signal can be realized, it shall fall within the protection scope of implementations of this disclosure.

The controller 162 is in electrical connection with the switch control unit 133, the voltage control circuit 140, the voltage detecting circuit 150, the output triggering circuit 170, the connection-state alarm circuit 180, and the current sampling circuit 210. As the main control device of the device 100 for connection detection, the controller 162 is configured to control the ON/OFF state of the switch circuit according to the trigger signal and the voltage detection signal. In implementations of this disclosure, in response to the voltage detection signal of the load detecting end 120 being less than the preset voltage value, the controller 162 outputs a first switch-control-signal to the switch circuit 130 to control the switch circuit 130 to be turned-off, to disconnect the electrical connection between the power module and the external load. The controller 162 is further configured to output the second switch-control-signal to control the switch circuit 130 to conduct the electrical connection between the power module and the external load, when the trigger signal is received and the voltage detection signal of the load detecting end 120 is greater than the preset voltage value. The controller 162 is further configured to output an ON-control signal according to the trigger signal. The voltage control circuit 140 outputs the voltage according to the ON-control signal.

In implementations of this disclosure, the controller 162 may adopt a programmable control device, for example, a MCU, a field-programmable gate array (FPGA), or a digital signal processor (DSP), etc. As the center for logic operation and control of the device 100 for connection detection, the controller 162 is mainly responsible for data acquisition and conversion, logic operation, data communication, execution of drive outputting, etc. The controller 162 is powered by the stable voltage outputted by the controller power-supply 161.

In implementations of this disclosure, a schematic diagram of a circuit structure of a controller is illustrated in FIG. 3. The controller 162 uses a micro controller U2 and may include multiple input/output ends. The controller 162 communicates and exchanges information with other functional modules or external devices through the multiple input/output ends, so that functions of the device 100 for connection detection (such as connection, drive and control) can be realized. In this implementation, referring to FIG. 2 again, the device 100 for connection detection may further include a communication interface module (not illustrated in the drawing) in electrical connection with the controller 162. The controller 162 can exchange information with external devices and perform corresponding control through the communication interface module.

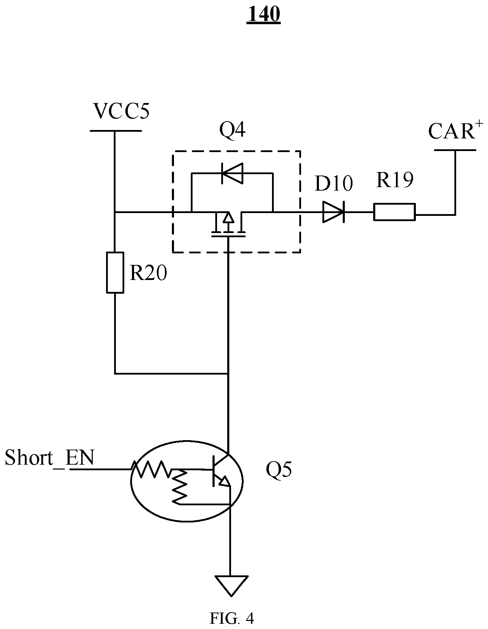

Referring to FIG. 4, the second switch unit 143 of the voltage control circuit 140 at least includes a first transistor Q5, a second transistor Q4, and a first resistor R20. A control end of the first transistor Q5 is in electrical connection with a signal input end Short_EN of the voltage control circuit 140, a first end of the first transistor Q5 is in electrical connection with a first grounded end, a second end of the first transistor Q5 is in electrical connection with a control end of the second transistor Q4, a first end of the second transistor Q4 is in electrical connection with the voltage input end, and the first resistor R20 is electrically connected between the control end of the second transistor Q4 and the first end of the second transistor Q4. The signal input end Short_EN is in electrical connection with the controller 162 to receive the ON-control signal.

In implementations of this disclosure, the unidirectional conduction unit includes a first diode D 10, the anode of the first diode D 10 is in electrical connection with a second end of the first transistor Q4, the cathode of the first diode D10 is in electrical connection with the current-limiting protection unit 145, which is configured to realize unidirectional conduction of the path between the voltage source VCC5 and the load connecting end 120.

In implementations of this disclosure, the current-limiting protection unit 145 includes a second resistor R19, one end of the second resistor R19 is in electrical connection with the cathode of the first diode D10, the other end of the second resistor R19 is in electrical connection with the voltage detecting end, which is configured to realize current-limiting protection of the path between the voltage source VCC5 and the load connecting end 120.

In implementations of this disclosure, the controller 162 controls the signal input end Short_EN to output a high level. After the first transistor Q5 is conducted, the first transistor Q4 is conducted, the voltage source VCC5 transfers voltage to the voltage detecting end through the first diode D10 and the second resistor R19.

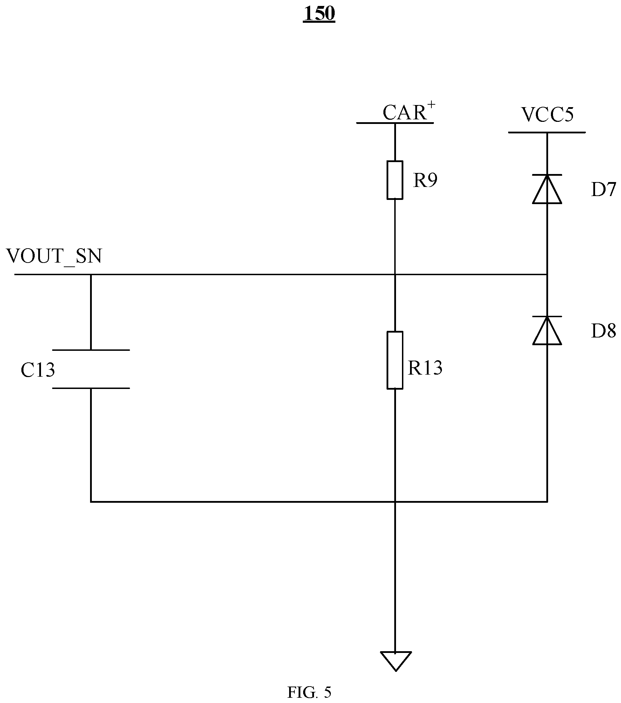

Referring to FIG. 5, FIG. 5 is a schematic diagram of a circuit structure of the voltage detecting circuit 150 illustrated in FIG. 2. The voltage division module 151 of the voltage detecting circuit 150 at least includes a third resistor R9 and a fourth resistor R13. One end of the third resistor R9 is in electrical connection with the voltage detecting end 142, the other end of the third resistor R9 is in electrical connection with one end of the fourth resistor R13, the other end of the fourth resistor R13 is in electrical connection with the second grounded end.

The clamping module 152 includes a second diode D7 and a third diode D8. The cathode of the second diode D7 is in electrical connection with the voltage input end 141, the anode of the second diode D7 is in electrical connection with a cathode of the third diode D8, the anode of the third diode D8 is in electrical connection with the second grounded end. The second diode D7 and the third diode D8 are configured to clamp the range of the voltage value outputted by a detection-signal output end VOUT_SN of the voltage detecting end within a certain range, for example, the voltage drop of the two ends of the second diode D7 is 0.7V, the range of the voltage value is (VCC5+0.7V, VCC5-0.7V).

In implementations of this disclosure, the third resistor R9 and the fourth resistor R13 perform voltage-division detection on the voltage transmitted from the first diode D10 and the second resistor R19 to the voltage detecting end. It means that the external load is in an abnormal connection state when the detection-signal output end VOUT_SN detects a voltage lower than the preset voltage value.

In implementations of this disclosure, when there is no forced output, the voltage control circuit 140 does not work, but the voltage detecting circuit 150 can still work normally to detect the voltage of the load connecting end 120.

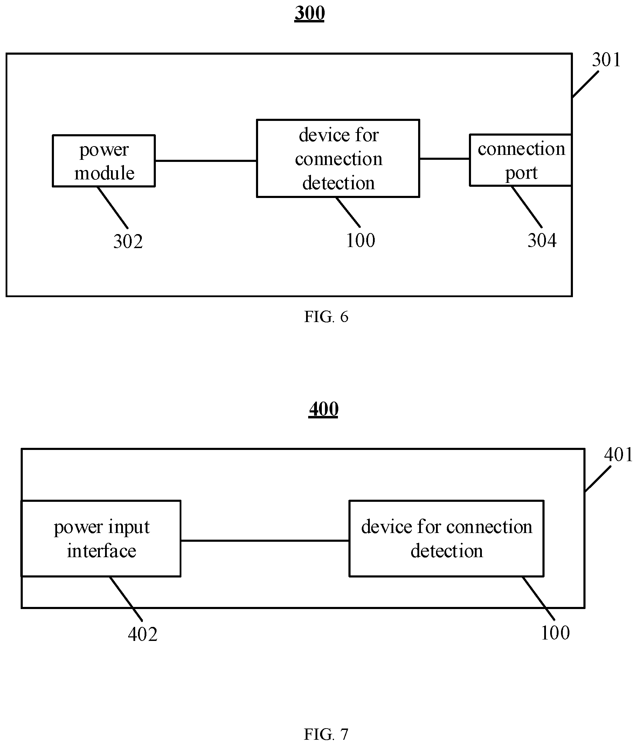

Based on this, when the device 100 for connection detection in this disclosure detects, through the voltage control circuit 140 and the voltage detecting circuit 150, a short circuit or the load connecting end being reversely connected with a load, the voltage of the load connecting end 120 is 0V, the first switch unit 132 is not closed and the power module does not output. When the load connecting end 120 is correctly connected with a car load without a car battery or is connected with a car load with a car battery, the voltage of the load connecting end 120 is not 0V in either case, the first switch unit 132 is closed and the battery can output. Therefore, when a user connects a jump starter apparatus to a car engine with a car battery or a car engine without a car battery, and presses the forced output of the jump starter apparatus, the jump starter apparatus can output in either case to start the car. Referring to FIG. 6, FIG. 6 is a schematic structure diagram illustrating a jump starter apparatus according to implementations of the disclosure. As illustrated in FIG. 6, the jump starter apparatus 300 includes a case 301, a power module 302, and the device 100 for connection detection illustrated in implementations of FIG. 1-FIG 4. The power module 302 and at least part structures of the device 100 for connection detection (e.g., the power connecting end 110, the load connecting end 120, the switch circuit 130, the voltage control circuit 140, the voltage detecting circuit 150, the control circuit 160, the load-reverse-connection control circuit 190, the temperature detecting module 200, and the current sampling circuit 210 etc.) can be arranged in the case 301. At least part structures of the device 100 for connection detection (e.g., the output triggering circuit 170, the connection-state alarm circuit 180 etc.) can be arranged on the case 301.

The power connecting end 110 of the device 100 for connection detection is in electrical connection with the power module 302 of the jump starter apparatus 300.

In implementations of this disclosure, the jump starter apparatus 300 further includes a connection port 304 arranged on the case 301. The connection port 304 is in electrical connection with the load detecting end 120 of the device 100 for connection detection. The connection port 304 is configured to be connected with the external load through accessing an external connector (not illustrated in the drawing), i.e. one end of the connector is detachably connected to the connection port 304 and the other end is detachably connected to the external load.

Referring to FIG. 7, FIG. 7 is a schematic structure diagram illustrating a battery clip according to implementations of the disclosure. As illustrated in FIG. 7, the battery clip 400 includes a case 401, a power input interface 402, and the device 100 for connection detection. The power input interface 402 is arranged on the case 401 and is configured to be electrically connected with an external power device (not illustrated in the drawing) such as an emergency jump starter, where the external power device includes a power module. In this implementations, the power input interface 402 is a connector, the external power device further includes a connection port adapted to the power input interface 402 of the battery clip 400, the battery clip 400 is configured to realize the electrical connection with the external power device through a detachable electrical connection between the power input interface 402 and the connection port.

At least part structures of the device 100 for connection detection (e.g., the power connecting end 110, the load connecting end 120, the switch circuit 130, the voltage control circuit 140, the voltage detecting circuit 150, the control circuit 160, the load-reverse-connection control circuit 190, the temperature detecting module 200 and the current sampling circuit 210 etc.) At least part structures of the device 100 for connection detection can be arranged on the case 401 (e.g., the output triggering circuit 170, the connection-state alarm circuit 180 etc.) can be arranged in the case 401.

The power connecting end 110 of the device 100 for connection detection is in electrical connection with the power input interface 402, and is configured to be connected with the power module of the external power device through the power input interface 402.

It should be understood that the application of implementations of this disclosure is not limited to the examples given above, may be improved or transformed by the skilled in this art according to the above description, and all these improvements and transformations shall fall within the protection scope of the claims appended to this disclosure.

## Claims

1. A device for connection detection, comprising:
a power connecting end, configured to be electrically connected with a power module;
a load connecting end, configured to be electrically connected with an external load;
a switch circuit, electrically connected between the power connecting end and the load connecting end;
a voltage control circuit, in electrical connection with the load connecting end and configured to output a voltage through the load connecting end; and
a voltage detecting circuit, in electrical connection with the load connecting end and configured to detect a voltage of the load connecting end and output a corresponding voltage detection signal, the voltage detection signal being configured to control an ON/OFF state of the switch circuit.

2. The device of claim 1, further comprising a control circuit in electrical connection with the switch circuit and the voltage detecting circuit, wherein the control circuit is configured to control the state of the switch circuit according to the voltage detection signal.

3. The device of claim 2, wherein the control circuit configured to control the state of the switch circuit according to the voltage detection signal is configured to:
in response to the voltage detection signal outputted by the voltage detecting circuit being less than a preset voltage value, output a first switch-control-signal to the switch circuit to control the switch circuit to be turned-off, to disconnect the electrical connection between the power module and the external load.

4. The device of claim 1, further comprising an output triggering circuit, wherein the output triggering circuit is configured to output a trigger signal in response to a trigger operation, the trigger signal is for controlling the voltage control circuit to output the voltage via the load connecting end.

5. The device of claim 4, further comprising a control circuit, wherein the control circuit is connected to the output triggering circuit, the voltage detecting circuit, and the switch circuit, the control circuit is configured to control an ON/OFF state of the switch circuit according to the trigger signal and the voltage detection signal.

6. The device of claim 5, wherein the control circuit is configured to output a second switch-control-signal to control the switch circuit to conduct the electrical connection between the power module and the external load, when the trigger signal is received and the voltage detection signal outputted by the voltage detecting circuit is greater than or equal to a preset voltage value.

7. The device of claim 5, wherein the control circuit is further configured to output an ON-control signal according to the trigger signal, the voltage control circuit is configured to output the voltage via the load connecting end according to the ON-control signal.

8. The device of claim 7, wherein the output triggering circuit comprises a key unit, the trigger operation comprises pressing the key unit.

9. The device of claim 1, wherein the voltage control circuit comprises:
a voltage input end, configured to be connected with a voltage source, wherein the voltage source is configured to provide the voltage;
a voltage detecting end, configured to be connected with the load connecting end;
a second switch unit, configured to be connected with the voltage source and the voltage detecting end, wherein
the voltage control circuit is able to conduct the voltage input end and the voltage detecting end through a closing of the second switch unit, such that the voltage source is able to output the voltage via the load connecting end.

10. The device of claim 9, wherein the second switch unit comprises a first transistor, a second transistor, and a first resistor, wherein a control end of the first transistor is in electrical connection with a signal input end of the voltage control circuit, a first end of the first transistor is in electrical connection with a first grounded end, a second end of the first transistor is in electrical connection with a control end of the second transistor, a first end of the second transistor is in electrical connection with the voltage input end, and the first resistor is electrically connected between the control end of the second transistor and the first end of the second transistor.

11. The device of claim 10, wherein
the voltage control circuit further comprises a unidirectional conduction unit, the voltage input end is connected with the voltage detecting end via the unidirectional conduction unit and the second switch unit, the unidirectional conduction unit is configured to realize unidirectional conduction of a path between the voltage source and the load connecting end;
the unidirectional conduction unit comprises a first diode; and/or
the voltage control circuit further comprises a current-limiting protection unit, the voltage input end is connected to the voltage detecting end via the current-limiting protection unit and the second switch unit, the current-limiting protection unit is configured for current-limiting protection of the path between the voltage source and the load connecting end, the current-limiting protection unit comprises a second resistor.

12. The device of claim 1, wherein the voltage detecting circuit comprises a voltage division module, the voltage division module is configured to divide the voltage of the load connecting end to obtain the voltage detection signal.

13. The device of claim 12, wherein the voltage detecting circuit further comprises a clamping module, the clamping module is in electrical connection with a voltage source, a second grounded end, and an output end of the voltage division module, an output end of the clamping module is coupled with the voltage detection signal.

14. The device of claim 13, wherein the voltage division module comprises a third resistor and a fourth resistor, the clamping module comprises a second diode and a third diode, one end of the third resistor is in electrical connection with the voltage detecting end, and the other end of the third resistor is in electrical connection with one end of the fourth resistor, the other end of the fourth resistor is in electrical connection with the second grounded end, a cathode of the second diode is in electrical connection with the voltage input end, an anode of the second diode is in electrical connection with a cathode of the third diode, an anode of the third diode is in electrical connection with the second grounded end.

15. The device of claim 1, wherein the power connecting end comprises a first power-connecting-end and a second power-connecting-end, and the load connecting end comprises a first load-connecting-end and a second load-connecting-end; and
the switch circuit is connected between the first power-connecting-end and the first load-connecting-end, the voltage control circuit and the voltage detecting circuit are each connected between the switch circuit and the first load-connecting-end.

16. The device of claim 15, wherein
the first power-connecting-end is configured to be connected to a positive electrode of the power module, and the second power-connecting-end is configured to be connected to a negative electrode of the power module; and
the first load-connecting-end is configured to be connected to a positive electrode of the external load, and the second load-connecting-end is configured to be connected to a negative electrode of the external load.

17. The device of claim 1, further comprising a connection-state alarm circuit in electrical connection with the control circuit, the connection-state alarm circuit is configured to signal an alarm to indicate that the external load is in an abnormal connection state, when the control circuit detects that the voltage detection signal outputted by the voltage detecting circuit is smaller than a preset voltage value.

18. The device of claim 17, wherein
the control circuit is configured to output a first indication-control-signal to the connection-state alarm circuit, when the control circuit detects that the voltage detection signal outputted by the voltage detecting circuit is smaller than the preset voltage value, the connection-state alarm circuit is configured to signal the alarm according to the first indication-control-signal, to indicate that the external load is in the abnormal connection state; and
the control circuit is configured to output a second indication-control-signal to the connection-state alarm circuit, when the control circuit detects that the voltage detection signal outputted by the voltage detecting circuit is greater than or equal to the preset voltage value, the connection-state alarm circuit is configured to signal an indication according to the second indication-control-signal, to indicate a corresponding work state.

19. The device of claim 1, further comprising a load-reverse-connection control circuit in electrical connection with the load connecting end, the load-reverse-connection control circuit is configured to detect a connection state of the external load via the load connecting end, and output a reverse-connection control signal upon detecting that the external load is in reverse connection with the load connecting end, the reverse-connection control signal is for triggering an alarm or controlling the ON/OFF state of the switch circuit.

20. The device of claim 2, wherein the switch circuit comprises a first switch unit and a switch control unit, the first switch unit is electrically connected between the power connecting end and the load connecting end, is configured to conduct or disconnect the electrical connection between the power module and the external load; and the switch control unit is in electrical connection with the first switch unit and the control circuit, the switch control unit is configured to receive a switch control signal outputted by the control circuit and control the first switch unit according to the switch control signal.

21. The device of claim 20, wherein the switch unit further comprises a switch drive-power unit in electrical connection with the power connecting end and the first switch unit, the switch drive-power unit is configured to provide drive-power for the first switch unit to make the switch circuit powered on.

22. A jump starter apparatus, comprising a case, a power module, and the device for connection detection according to any of claims 1-21, the power module and at least part of the device for connection detection are arranged in the case, the power connecting end of the device for connection detection is in electrical connection with the power module.

23. A battery clip, comprising a case and the device for connection detection according to any of claims 1-21, the power module and at least part of the device for connection detection are arranged in the case, the power connecting end of the device for connection detection is configured to be connected to a power input interface.
